# EUROPEAN PATENT APPLICATION

(11) **EP 4 843 384 A1**
(43) Date of publication of application: **25.11.2026**
(21) Application number: 25177456.8
(22) Date of filing: 19.05.2025
(51) Int. Cl.: A01K 15/02, A01K 15/04, A01K 27/00, A01K 13/00

(54) **PET ANTI-RUSH HARNESS**

(71) Applicant: Wu, Lien-Chieh, 730010 Tainan City (TW)
(72) Inventor: Wu, Lien-Chieh, 730010 Tainan City (TW)
(74) Representative: DREISS Patentanwälte PartG mbB

(57) **Abstract**

A pet anti-rush harness to be worn on a pet (9) includes a collar unit (1) for encircling a neck of the pet, and a pull cord unit (2) including at least one pull cord (21) disposed on the collar unit (1). The pull cord (21) has a first cord end (21a) which is connected with the collar unit (1), extends from the first cord end (21a) to be guided over an inward part a leg of the pet, and has an extending section (213) which extends upwardly and which passes through and is slidable relative to the collar unit (1) to terminate at a second cord end (21b) that is disposed at an upper portion of the pet near the neck such that pulling of the second cord end (21b) of the pull cord (21) results in raising of the leg of the pet so as to prevent the pet from further rushing.

## Description

The disclosure relates to a pet lead device, and more particularly to a pet harness for anti-rush purposes.

Pets, such as dogs, are restrained and travel with their owners by a leash attached to a collar, a harness or a halter around their necks. A pet may rush suddenly and pull against the leash while walking, which might cause injury to its neck if the owner vigorously pulls back the leash. Such discomfort of strangling the pet's neck might result in escape of the pet and losing control of the pet. Moreover, if the owner does not apply sufficient force in pulling the leash, he/she might be pulled by the pet and fall by accident.

Therefore, an object of the disclosure is to provide a pet anti-rush harness that can alleviate at least one of the drawbacks of the prior art.

According to the disclosure, the pet anti-rush harness to be worn on a pet includes a collar unit for encircling a neck of the pet, and a pull cord unit including at least one pull cord disposed on the collar unit. The pull cord has a first cord end which is connected with the collar unit, extends from the first cord end to be guided over an inward part of a leg of the pet, and has an extending section which extends upwardly and which passes through and is slidable relative to the collar unit to terminate at a second cord end that is disposed at an upper portion of the pet near the neck such that pulling of the second cord end of the pull cord results in raising of the leg of the pet.

With the pull cord unit, the owner operates the pull cord unit to raise the leg of the pet to prevent the pet from rushing. Even a child or a pet owner having little physical strength is capable of easily holding a large pet that rushes, and raising the leg of the pet by pulling the pull cord to prevent the pet from habitually resisting the owner's pulling force.

Other features and advantages of the disclosure will become apparent in the following detailed description of the embodiments with reference to the accompanying drawings. It is noted that various features may not be drawn to scale.
FIG. 1 is a perspective view illustrating an embodiment of a pet anti-rush harness according to the disclosure.
FIG. 2 is a perspective view illustrating the embodiment in a first state of use.
FIG. 3 is an enlarged perspective view of a portion of FIG. 2.
FIG. 4 is a perspective view illustrating the embodiment in a second state of use.
FIG. 5 is a perspective view illustrating another embodiment of a pet anti-rush harness according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

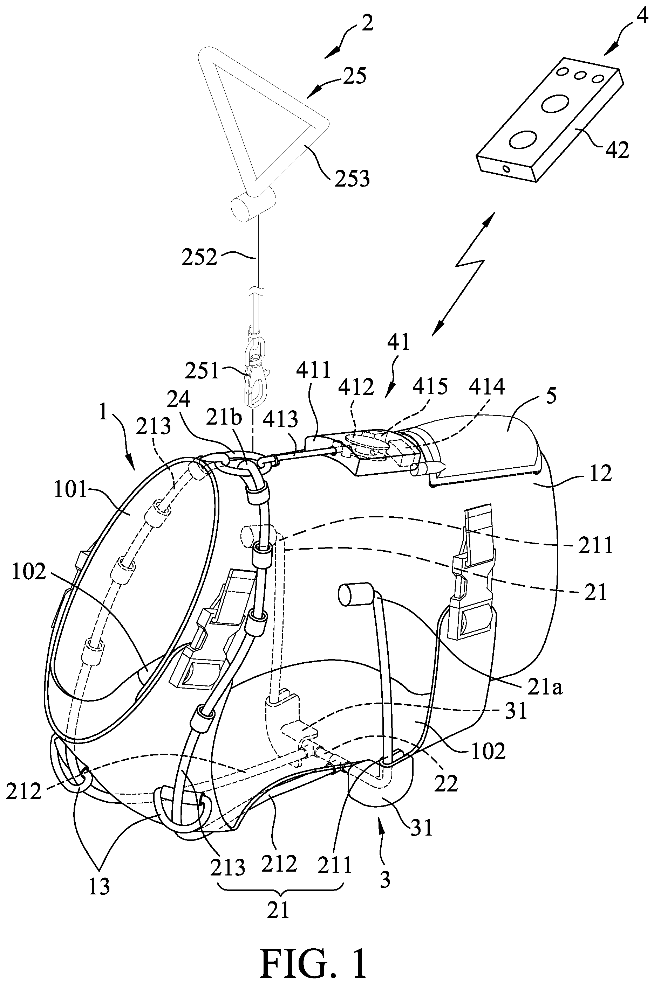

Referring to FIG. 1, an embodiment of a pet anti-rush harness according to the disclosure is adapted to be worn on a pet 9, such as a dog. The pet anti-rush harness includes a collar unit 1, a pull cord unit 2, a cushion unit 3, a reel unit 4 and a water container 5.

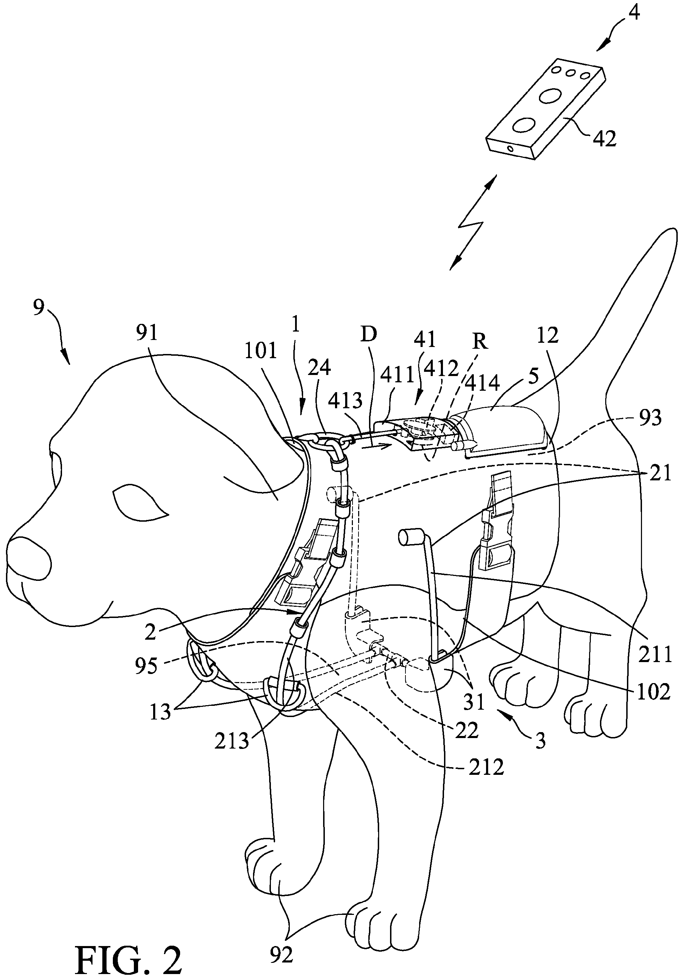

The collar unit 1 includes a garment 12 to be worn on the pet 9, and two fixed rings 13 securely disposed on the garment 12 at a front side thereof and spaced apart from each other in a left-right direction. The garment 12 has a collar portion 101 for encircling a neck 91 of the pet 9, and left and right apertures 102 for two forelegs of the pet 9 to insert therethrough, respectively, as shown in FIG. 2.

The pull cord unit 2 includes two pull cords 21 respectively disposed on left and right sides of the collar unit 1, a connecting cord 22 interconnecting the two pull cords 21, a connecting ring 24 interconnecting the two pull cords 21, and a leash module 25 removably connected with the connecting ring 24 to be gripped by the pet owner.

Each pull cord 21 has a first cord end 21a which is connected with the garment 12, a lateral section 211 which extends downwardly from the first cord end 21a and is guided inwardly over a lower portion of the garment 12, a front section 212 which extends forwardly from the lateral section 211 toward a respective one of the fixed rings 13, and an extension section 213 which extends upwardly from the front section 212 and slidably passes through the respective fixed ring 13 to terminate at a second cord end 21b that is connected with the connecting ring 24. Hence, the front section 212 is guided over an inward part of a foreleg of the pet 9, and the extending section 213 passes through the fixed ring 13 and extends upwardly to have the second cord end 21b be disposed at an upper portion of the pet near the neck 91, as shown in FIG. 2.

The connecting cord 22 interconnects junctures of the lateral sections 211 and the front sections 212 of the two pull cords 21. Specifically, the connecting cord 22 is provided with a quick-releasing fastening structure so as not to interfere with putting the garment 12 on the pet 9 and taking the garment 12 off the pet 9. Since a variety of the quick-releasing fastening structures may be provided and are of known art, a detailed description and illustration in drawings are omitted.

The connecting ring 24 interconnects the second cord ends 21b of the two pull cords 21. The leash module 25 has a leash connector 251 removably connected with the connecting ring 24, a leash 252 connected with the leash connector 251 at one end, and a grip 253 connected with another end of the leash 252.

The cushion unit 3 includes two cushion pads 31 each disposed on the lateral section 211 of the respective pull cord 21 to be interposed between the pull cord 21 and a rear side of the foreleg of the pet 9 for protection purposes.

The reel unit 4 includes a reel module 41 which is mounted on an upper portion of the garment 12, and a remote controller 42 which is operable by a pet owner to generate a reel-in control signal or a reel-out control signal. The reel module 41 includes a housing 411 mounted on the upper portion of the garment 12, a reel 412 disposed in the housing 411 and being operably rotatable, a cable 413 having an end connected with the reel 412 and an opposite end connected with the connecting ring 24, a control unit 414 disposed in the housing 411, and a power source 415 disposed in the housing 411 and supplying power to the reel 412 and the control unit 414.

In the embodiment, the reel 412 is driven by an electric stepped motor to reel in or out the cable 413. Alternatively, the reel 412 may be driven by an electromagnetic key and a guideway mechanism or a gearing mechanism.

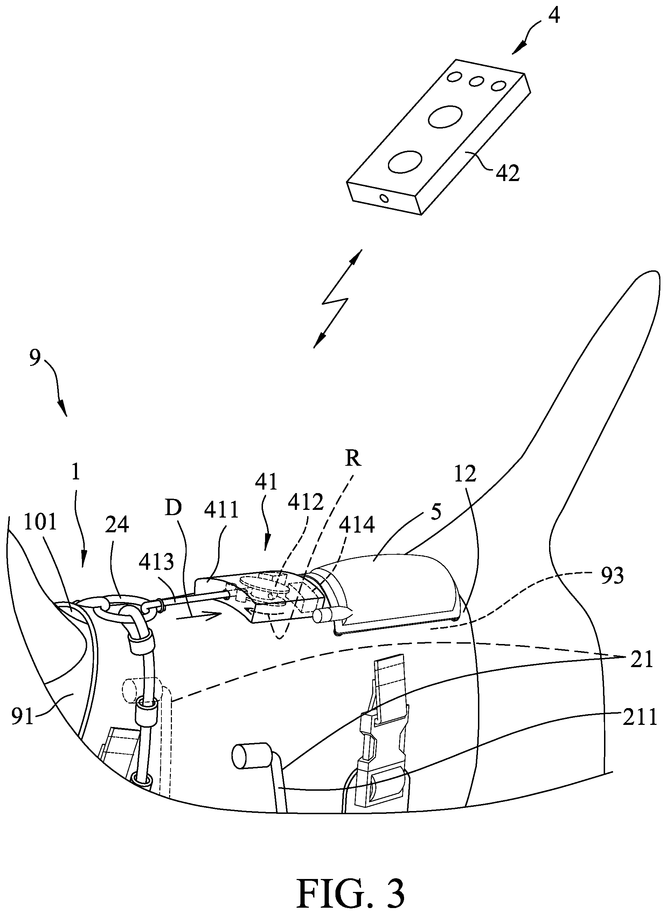

The control unit 414 is in wireless signal connection with the remote controller 42, and is in signal connection with the reel 412. The control unit 414 receives a reel-in control signal from the remote controller 42 to bring rotation of the reel 412 in a rotational direction (R) (as shown in FIG. 3) so as to reel in the cable 413, and receives a reel-out control signal from the remote controller 42 to bring rotation of the reel 412 in an opposite rotational direction so as to reel out the cable 413. In the embodiment, the control unit 414 includes a wireless communication module receiving the reel-in and reel-out control signals, and a microcontroller unit (MCU) generating a driving signal according to the reel-in and reel-out control signals to drive the rotation of the reel 412.

In the embodiment, the power source 415 is a rechargeable battery, such as, but not limited to, a lithium-ion battery. Alternatively, the power source 415 may be a primary battery to supply power to the reel 412 and the control unit 414.

For example, the remote controller 42 has two actuating buttons operably actuating the reel-in and reel-out control signals, and a wireless communication module sending the reel-in and reel-out control signals, such as, but not limited to, the wireless communication module based on Radio Frequency Identification (RFID) technology or Bluetooth technology.

The water container 5 is removably mounted on an upper portion of the garment 12 in a laterally symmetric manner so as to evenly dispense water in the water container 5 into left and right parts thereof. In the embodiment, the water container 5 is removably secured to the garment 12 by means of a snap fastener or a hook and loop fastener.

With reference to FIGS. 2 and 3, in use, when the pet 9 rushes, the pet owner operates the remote controller 42 to generate a reel-in control signal, and the control unit 414 receives the reel-in control signal and drives the rotation of the reel 412 in the rotational direction (R) so as to reel in the cable 413 on the reel 412, which pulls and moves the connecting ring 24 along the moving direction (D) toward the housing 411 so as to pull and move the pull cords 21 rearwardly, thereby raising the forelegs of the pet 9 to prevent the pet 9 from further rushing.

After the pet 9 relaxes and calms down, it is no longer required to raise the forelegs of the pet 9, so the pet owner may operate the remote controller 42 to generate the reel-out control signal. The control unit 414 receives the reel-out control signal and drives the rotation of the reel 412 in the opposite rotational direction so as to loosen the pull cords 21 to slide relative to the garment 12 and return the pull cords 21 to their original position.

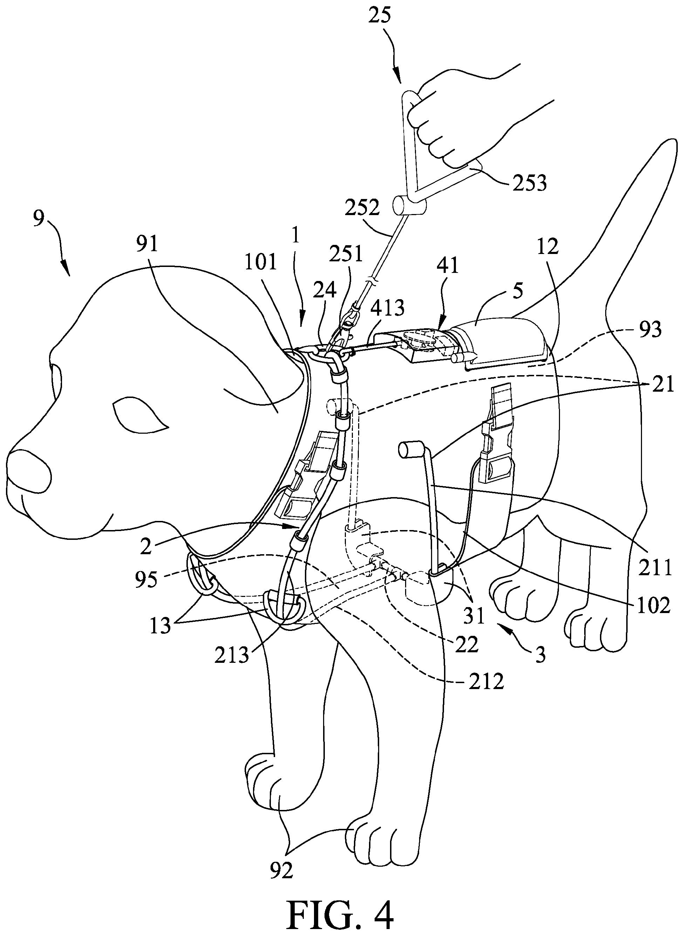

With reference to FIGS. 1 and 4, in another use, the leash connector 251 is connected with the connecting ring 24 and the pet owner grips the grip 253 of the leash module 25. When the pet 9 rushes suddenly, the owner may operate the grip 253 and pull rearwardly or both rearwardly and upwardly to bring the connecting ring 24 to move in the same direction so as to pull and move the pull cords 21 rearwardly, thereby raising the forelegs of the pet 9.

In sum, with the pull cord unit 2 and the reel unit 4, when the pet 9 rushes, the pet owner may operate the remote controller 42 or pull the leash module 25 connected with the connecting ring 24, and the forelegs of the pet are raised through the pull cords 21 to prevent the pet 9 from further rushing. Moreover, with the garment 12, the pull cords 21 and the connecting cord 22, when the pull cords 21 are pulled and moved rearwardly or upwardly, the front sections 212 of the pull cords 21 are moved close to each other through the connecting cord 22. Thus, a part of the pulling force applied during the operation of the connecting ring 24 is spread on the forelegs 92, the back 93 and the chest 95 of the pet 9 so the neck 91 of the pet 9 is not injured and the comfort of wearing is improved for the pet 9.

From the perspective of animal behavior, an animal such as the pet 9 uses its four legs to maintain balance when walking. By raising of the forelegs 92 of the pet 9, the forelegs 92 are stopped so the pet 9 must stop walking and stand firmly on the forelegs 92 to keep its balance, hence further rushing is stopped.

From the perspective of animal psychology, the pet 9 instinctively pulls in a direction opposite to the direction in which the owner pulls. As the forelegs 92 of the pet 9 are raised upwardly, compared to the conventional pet leash which is operated to pull the collar rearwardly, the pet does not feel the pulling force from the owner, instead the pet 9 feels a pulling force in the forward and upward direction, so the pet 9 does not pull in the opposite direction against the owner's.

From the perspective of mechanics, the embodiment has an effect of a compound pulley system. Specifically, a section of each pull cord 21 is guided over one foreleg 92 of the pet 9 to produce an effort-saving effect similar to a movable pulley to reduce the required pulling force for easily stopping the pet from rushing. Additionally, with the fixed rings 13 changing the pulling direction to pull the pull cords 21, a direction changing effect similar to a fixed pulley is produced.

Furthermore, when the pet 9 is located at a right side of the owner and is led by the leash module 25, and desires to move away from the owner, a pulling force applied to the right pull cord 21 is greater than that applied to the left pull cord 21 so as to generate a greater restraining force to the right foreleg 92. Moreover, the front sections 212 of the pull cords 21 extend and slidably pass through the fixed rings 13, respectively. During the pulling operation of the pull cords 21 by the owner through the grip 253, the pulling force has a force component in a direction toward the owner so as to efficiently restrain the movement of the pet 9 away from the owner and to move the pet 9 closer to the owner, which improves the owner's control and safety of the pet 9. Similarly, when the pet 9 is located at a left side of the owner and is led by the leash module 25, and desires to move away from the owner, a greater restraining force to the left foreleg 92 is generated so as to urge the pet 9 to be closer to the owner.

In the embodiment, the number of the pull cords 21 and the cushion pads 31 is two. Alternatively, in other embodiments, only one pull cord 21 and cushion pad 31 may be provided. Furthermore, the two pull cords 21 may be guided over two rear legs of the pet 9. The reel unit 4 may be dispensed with.

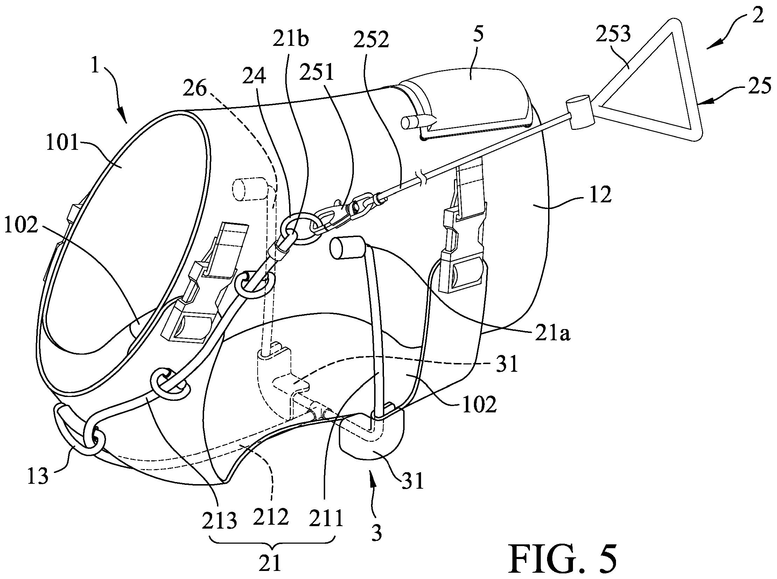

For example, with reference to FIG. 5, in another embodiment, the collar unit 1 includes a garment 12 to be worn on the pet 9, and a fixed ring 13 securely disposed on the front side of the garment 12. The pull cord unit 2 includes a pull cord 21 disposed on a left side of the garment 12, a connecting ring 24 connected with the pull cord 21, a leash module 25 removably connected with the connecting ring 24 to be gripped by the pet owner, and an auxiliary cord 26 disposed on a right side of the garment 12 and connected with the pull cord 21. The pull cord 21 has a first cord end 21a which is connected with the left side of the garment 12, a lateral section 211 which extends downwardly from the first cord end 21a and is guided inwardly over a lower portion of the garment 12, a front section 212 which extends forwardly from the lateral section 211 toward the fixed ring 13, and an extension section 213 which extends upwardly from the front section 212 and slidably passes through the fixed ring 13 to terminate at a second cord end 21b that is connected with the connecting ring 24. The lateral section 211 and the extension section 213 are disposed on the left side of the garment 12. The auxiliary cord 26 has a first auxiliary cord end connected with the right side of the garment 12, and a lateral auxiliary section extending downwardly from the first auxiliary cord end and is guided inwardly over the lower portion of the garment 12 to be connected with the lateral section 211 of the pull cord 21. The auxiliary cord 26 is symmetrical to the lateral section 211 of the pull cord 21 in a left-right direction for two cushion pads 31 to be respectively disposed thereon.

The leash module 25 is similar to that of the previous embodiment, and is removably connected with the connecting ring 24.

When the pet owner grips the grip 253 of the leash module 25 and pulls the pull cord 21 through the leash module 25, a force component of the pulling force toward the pet owner is generated to inhibit movement of the pet 9 away from the owner so as to improve pet owner's control and safety of the pet 9 during travel of the pet 9 and facilitate controlling the pet 9 closer to the owner. Moreover, when the owner pulls the leash module 25 to change the travel direction of the pet 9, a forward momentum of the pet 9 is reduced so that the owner pulls the pull cord 21 by a reduced pulling force, and, at the same time, the lateral section 211 of the pull cord 21 and the cushion pad 31 which are guided over the rear side of the foreleg of the pet 9 are driven to facilitate turning the pet 9 and preventing the pet from rushing.

It is noted that, alternatively, the pull cord 21 and the auxiliary cord 26 may be disposed at the right side and the left side of the garment 12, respectively.

As illustrated, with the pull cord unit 2, the owner holds and pulls the leash module 25 when the pet 9 rushes so as to raise the forelegs 92 of the pet 9 to prevent the pet 9 from further rushing. Furthermore, when the pet 9 rushes with a greater force, a greater force is applied to raise the forelegs 92 of the pet 9. Hence, even a child or a pet owner having little physical strength may easily hold the pet 9 that rushes, and raise the forelegs 92 of the pet 9 by pulling the pull cords 21 to prevent the pet 9 from habitually resisting the owner's pulling force. Moreover, a part of the pulling force is spread on the forelegs 92, the back 93 and the chest 95 of the pet 9 so the neck 91 of the pet 9 is not injured and the comfort of wearing is improved for the pet 9.

Furthermore, through the leash module 25 removably connected with the connecting ring 24, the owner may grip the leash module 25 to hold the pet 9 to prevent the pet 9 from rushing in a first state of use, and may operate the reel unit 4 to prevent the pet 9 from rushing in a second state of use when the pet 9 moves freely. Thus, the pet anti-rush harness of the embodiment may be used for various activities of the pet 9.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A pet anti-rush harness to be worn on a pet (9), comprising:
a collar unit (1) for encircling a neck (91) of the pet (9); and
a pull cord unit (2), **characterized in that**:
said pull cord unit (2) includes at least one pull cord (21) disposed on said collar unit (1), said at least one pull cord (21) having a first cord end (21a) which is connected with said collar unit (1), extending from said first cord end (21a) to be guided over an inward part of a leg of the pet (9), and having an extending section (213) which extends upwardly and which passes through and is slidable relative to said collar unit (1) to terminate at a second cord end (21b) that is disposed at an upper portion of the pet near the neck (91) such that pulling of said second cord end (21b) of said at least one pull cord (21) results in raising of the leg of the pet (9).

2. The pet anti-rush harness of claim 1, further comprising a cushion unit (3), said cushion unit (3) including at least one cushion pad (31) interposed between said at least one pull cord (21) and a rear side of the leg of the pet (9).

3. The pet anti-rush harness of claim 1, wherein said collar unit (1) includes a garment (12) to be worn on the pet (9).

4. The pet anti-rush harness of claim 3, wherein said collar unit (1) further includes a fixed ring (13) securely disposed on said garment (12) at a front side thereof, said first cord end (21a) of said at least one pull cord (21) being connected with said garment (12), said at least one pull cord (21) extending from said first cord end (21a) and slidably passing through said fixed ring (13).

5. The pet anti-rush harness of claim 3, wherein said pull cord unit (2) includes two of said cords (21), said collar unit (1) further including two fixed rings (13) securely disposed on said garment (12) at a front side thereof, said two cords (21) extending and slidably passing through said two fixed rings (13), respectively.

6. The pet anti-rush harness of claim 3, further comprising a reel unit (4), said reel unit (4) including a reel module (41) which is mounted on said garment (12) and which has a control unit (414) and a cable (413) that is coupled with said pull cord unit (2), and a remote controller (42) in wireless signal connection with said control unit (414) such that, with operation of said remote controller (42), a control signal is generated thereby and received by said control unit (414) to reel in or out said cable (413).

7. The pet anti-rush harness of claim 6, wherein said reel module (41) further has a housing (411) mounted on said garment (12), and a reel (412) disposed in said housing (411) and operably rotatable by said control signal, said cable (413) having an end connected with said reel (412), said control unit (414) being disposed in said housing (411) and in signal connection with said reel (412) to receive said control signal from said remote controller (42) to bring rotation of said reel (412) so as to reel in or out said cable (413).

8. The pet anti-rush harness of claim 5, wherein each of said two cords (21) has a lateral section (211) which extends downwardly from said first cord end (21a) and is guided inwardly over a lower portion of said garment (12), and a front section (212) which extends forwardly from said lateral section (211) toward a respective one of said fixed rings (13), said extension section (213) extending upwardly from said front section (212) and slidably passing through said respective one of said fixed rings (13), said pull cord unit (2) further including a connecting cord (22) interconnecting junctures of said lateral sections (211) and said front sections (212) of said two cords (21).

9. The pet anti-rush harness of claim 6, wherein said pull cord unit (2) further includes a connecting ring (24) which interconnects said second cord end (21b) of said at least one pull cord (21) and said cable (413), and a leash module (25) which is removably connected with said connecting ring (24).

10. The pet anti-rush harness of claim 3, further comprising a water container (5) which is removably mounted on an upper portion of said garment (12) in a laterally symmetric manner.

11. The pet anti-rush harness of claim 4, wherein said first cord end (21a) of said at least one pull cord (21) is connected with one of left and right sides of said garment (12).
